# EUROPEAN PATENT APPLICATION

(11) **EP 2 863 203 A1**
(43) Date of publication of application: **22.04.2015**
(21) Application number: 13806669.1
(22) Date of filing: 12.06.2013
(51) Int. Cl.: G01N 1/00, B82Y 35/00, C01B 31/02

(54) **PARTICLE ADSORPTION MICROPROBE**

(30) Priority: 18.06.2012 JP 2012136783
(71) Applicant: Nitto Denko Corporation, Ibaraki-shi, Osaka 567-8680 (JP)
(72) Inventor: MAENO, Youhei, Ibaraki-shi, Osaka 567-8680 (JP)
(74) Representative: Müller-Boré & Partner Patentanwälte PartG mbB
(86) International application number: PCT/JP2013/066184
(87) International publication number: WO 2013/191048

(57) **Abstract**

Provided is a novel particle adsorption microprobe for picking up an extremely fine particle by adsorbing the particle, which can selectively pick up only one extremely fine particle without requiring the application of a physical stress in picking up the particle and without contaminating a foreign matter surface in picking up the particle, and allows the particle to be analytically evaluated as it is in an analyzer after its picking-up. A particle adsorption microprobe of the present invention includes a carbon nanotube aggregate including a plurality of carbon nanotubes and adsorbs only one particle having a diameter of 10 µm or less.

## Description

### Technical Field

The present invention relates to a particle adsorption microprobe, and more specifically, to a particle adsorption microprobe to be suitably used for, for example, picking up only one from fine particles scattered on a surface of an object to be analyzed in an analysis application or the like so that the particle may be carried into an analyzer and analytically evaluated.

### Background Art

In order to provide a clean member free of foreign matter, it is important to elucidate, for example, a route through which a member is contaminated with foreign matter in a production process therefor by analytically evaluating, for example, composition or shape of the foreign matter scattered on a surface of the member.

Generally used means for evaluating the composition or shape of the foreign matter scattered on the surface of the member is a particle adsorption probe that uses a tungsten probe or a microknife as a sampling tool. Such particle adsorption probe is used to pick up the foreign matter scattered on the surface of the member with the sampling tool so that the foreign matter may be carried into an analyzer and analytically evaluated for its composition, shape, or the like (see, for example, Patent Literature 1).

However, in order to pick up the foreign matter, the particle adsorption probe that uses a tungsten probe or a microknife as a sampling tool requires application of a physical stress generated by, for example, puncturing the foreign matter with the sampling tool. When such physical stress is applied, a problem arises in that it becomes difficult to observe the raw structure or composition of the surface owing to, for example, detachment of a surface coating material or a change in surface unevenness or layer structure.

Meanwhile, when an adhesive such as a paste or a pressure-sensitive adhesive such as a double-sided tape is used as a sampling tool in order to pick up the foreign matter without applying a physical stress, there arises a problem in that an organic component contained in the adhesive or the pressure-sensitive adhesive contaminates the surface of the foreign matter to prevent accurate analytical evaluation of the foreign matter. In addition, when the adhesive or pressure-sensitive adhesive as described above is used as a sampling tool, it is difficult to selectively pick up a particle having a specific particle diameter from a group of particles having a wide particle diameter distribution.

Particularly in microsampling of the foreign matter, only one extremely fine particle is required to be selectively picked up and analyzed in some cases. However, when such adhesive or pressure-sensitive adhesive as described above is used as a sampling tool, it is difficult to selectively pick up the only one extremely fine particle.

In addition, when the foreign matter picked up using the related-art particle adsorption probe is carried into an analyzer and analytically evaluated, the foreign matter that has been carried into the analyzer needs to be newly fixed with a paste or the like before the analytical evaluation, which complicates the process.

### Citation List

### Patent Literature

[PTL 1] JP 2008-52232 A

### Summary of Invention

### Technical Problem

An obj ect of the present invention is to provide a novel particle adsorption microprobe for picking up an extremely fine particle by adsorbing the particle, which can selectively pick up only one extremely fine particle without requiring the application of a physical stress in picking up the particle and without contaminating a foreign matter surface in picking up the particle, and allows the particle to be analytically evaluated as it is in an analyzer after its picking-up.

### Solution to Problem

A particle adsorption microprobe of the present invention includes a carbon nanotube aggregate including a plurality of carbon nanotubes, in which the particle adsorption microprobe adsorbs only one particle having a diameter of 10 µm or less.

In a preferred embodiment, the carbon nanotube aggregate has a diameter of 10 µm or less.

In a preferred embodiment, the carbon nanotube aggregate has a length of 10 µm or less.

In a preferred embodiment, the carbon nanotubes each have a plurality of walls, a distribution width of a wall number distribution of the carbon nanotubes is 10 walls or more, and a relative frequency of a mode of the wall number distribution is 25% or less.

In a preferred embodiment, the carbon nanotubes each have a plurality of walls, a mode of a wall number distribution of the carbon nanotubes is present at 10 or less walls in number, and a relative frequency of the mode is 30% or more.

In a preferred embodiment, the particle adsorption microprobe of the present invention further includes a shaft-shaped base material, in which the carbon nanotube aggregate is provided on the shaft-shaped base material.

### Advantageous Effects of Invention

According to one embodiment of the present invention, the novel particle adsorption microprobe for picking up an extremely fine particle by adsorbing the particle, which can selectively pick up only one extremely fine particle without requiring the application of a physical stress in picking up the particle and without contaminating a foreign matter surface in picking up the particle, and allows the particle to be analytically evaluated as it is in an analyzer after its picking-up, can be provided.

### Brief Description of Drawings

FIG. **1** is a schematic sectional view of an example of a particle adsorption microprobe in a preferred embodiment of the present invention.
FIG. **2** is a schematic sectional view of another example of the particle adsorption microprobe in the preferred embodiment of the present invention.
FIG. **3** is a schematic sectional view of an apparatus for producing a carbon nanotube aggregate.
FIG. **4** is a photographic view provided by a scanning electron microscope (SEM) showing a state where a particle is adsorbed by a particle adsorption microprobe obtained in Example 1.

### Description of Embodiments

### <<Particle adsorption microprobe>>

A particle adsorption microprobe of the present invention includes a carbon nanotube aggregate including a plurality of carbon nanotubes. The particle adsorption microprobe of the present invention preferably includes the carbon nanotube aggregate including a plurality of carbon nanotubes at at least a tip portion thereof. By virtue of including such carbon nanotube aggregate, the particle adsorption microprobe of the present invention can selectively pick up only one extremely fine particle without requiring the application of a physical stress in picking up the particle and without contaminating a foreign matter surface in picking up the particle, and allows the particle to be analytically evaluated as it is in an analyzer after its picking-up.

The particle adsorption microprobe of the present invention may adopt, for example, a construction in which the particle adsorption microprobe consists only of the carbon nanotube aggregate including a plurality of carbon nanotubes, or a construction in which the carbon nanotube aggregate including a plurality of carbon nanotubes is provided on a shaft-shaped base material. Herein, the shaft-shaped base material means a base material having a shaft shape, and may be alternatively referred to as, for example, shaft, support rod, or metal rod in some cases.

The particle adsorption microprobe of the present invention can selectively pick up only one extremely fine particle. Specifically, the particle adsorption microprobe of the present invention adsorbs only one particle having a diameter of 10 µm or less. Here, the aspect according to which the microprobe "adsorbs only one particle having a diameter of 10 µm or less" does not comprehend an aspect according to which the microprobe adsorbs two or more particles each having a diameter of 10 µm or less.

As described above, the diameter of the only one particle to be adsorbed by the particle adsorption microprobe of the present invention is 10 µm or less, preferably 8 µm or less, more preferably 6 µm or less, still more preferably 5 µm or less, particularly preferably 4 µm or less, most preferably 3 µm or less. A lower limit for the diameter of the only one particle to be adsorbed by the particle adsorption microprobe of the present invention is preferably 0.3 µm or more.

It is not preferred that the particle adsorption microprobe of the present invention adsorb a particle having a diameter of more than 10 µm.

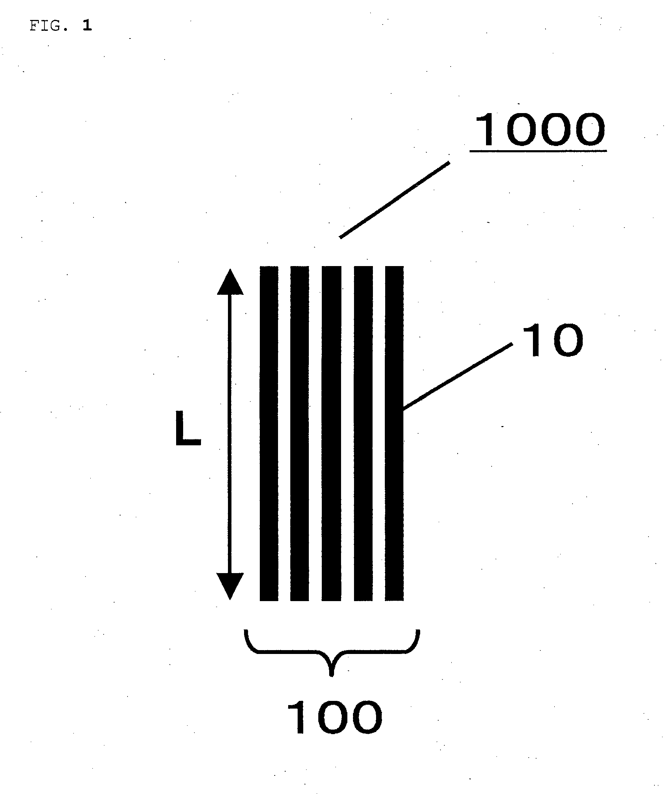

FIG. 1 is a schematic sectional view of an example of a particle adsorption microprobe in a preferred embodiment of the present invention. In FIG. **1****,** a particle adsorption microprobe **1000** of the present invention consists only of a carbon nanotube aggregate **100** including a plurality of carbon nanotubes **10.** In FIG. **1****,** the plurality of carbon nanotubes **10** are each aligned in the direction of a length **L** and constitute the bundle-like carbon nanotube aggregate **100.**

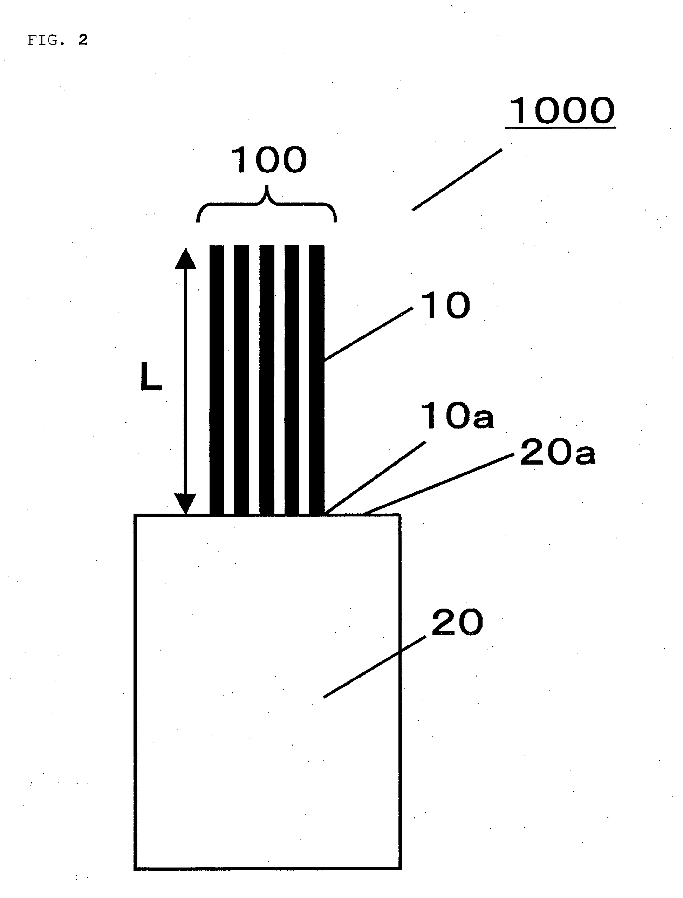

FIG. **2** is a schematic sectional view of another example of the particle adsorption microprobe in the preferred embodiment of the present invention. In FIG. **2****,** in the particle adsorption microprobe **1000** of the present invention, the carbon nanotube aggregate **100** including the plurality of carbon nanotubes **10** is provided on a shaft-shaped base material **20**. In FIG. **2****,** the plurality of carbon nanotubes **10** are each aligned in the direction of the length **L** and constitute the bundle-like carbon nanotube aggregate **100.** In FIG. **2****,** one end **10a** of each of the plurality of carbon nanotubes **10** is fixed onto the shaft-shaped base material **20.** As illustrated in FIG. **2****,** the plurality of carbon nanotubes **10** are each preferably aligned in a direction substantially perpendicular to the shaft-shaped base material **20.** The term "direction substantially perpendicular" as used herein means that the angle of the carbon nanotube with respect to a cross-section side surface **20a** of the shaft-shaped base material **20** falls within the range of preferably 90°±20°, more preferably 90°±15°, still more preferably 90°±10°, particularly preferably 90°±5°.

In the particle adsorption microprobe of the present invention, the carbon nanotube aggregate **100** has a length of preferably 10 µm or less, more preferably from 0.5 µm to 10 µm, still more preferably from 0.5 µm to 8 µm, particularly preferably from 1 µm to 6 µm, most preferably from 2 µm to 5 µm. Adjusting the length of the carbon nanotube aggregate **100** in the particle adsorption microprobe of the present invention within the range improves its ability to selectively pick up only one extremely fine particle.

In the particle adsorptionmicroprobe of the present invention, the carbon nanotube aggregate **100** has a diameter of preferably 10 µm or less, more preferably from 0.3 µm to 10 µm, still more preferably from 0.5 µm to 8 µm, still more preferably from 0.5 µm to 6 µm, still more preferably from 0.5 µm to 5 µm, still more preferably from 1 µm to 4 µm, particularly preferably from 1 µm to 3 µm, most preferably from 1 µm to 2 µm. Adjusting the diameter of the carbon nanotube aggregate **100** in the particle adsorption microprobe of the present invention within the range improves its ability to selectively pick up only one extremely fine particle.

In the particle adsorption microprobe of the present invention, regarding the shape of each of the carbon nanotubes, the lateral section of the carbon nanotube has only to have any appropriate shape. The lateral section is of, for example, a substantially circular shape, an oval shape, or an n-gonal shape (n represents an integer of 3 or more).

In the particle adsorption microprobe of the present invention, the specific surface area and density of each of the carbon nanotubes may be set to any appropriate values.

Any appropriate material may be adopted as a material for the shaft-shaped base material depending on purposes. Although ruby, sapphire, and the like may be given as examples of such material, preferred examples of the material include conductive materials such as SUS and tungsten carbide.

Any appropriate size may be adopted as the size of the shaft-shaped base material depending on purposes. Such size is preferably as follows: the area of the cross-section side surface of the shaft-shaped base material is larger than an area calculated from the diameter of the carbon nanotube aggregate. It should be noted that any appropriate length may be adopted as the length of the shaft-shaped base material (length in a direction perpendicular to the cross-section side surface) depending on purposes.

When the particle adsorption microprobe of the present invention has a construction in which the carbon nanotube aggregate is provided on the shaft-shaped base material as illustrated in FIG. **2****,** any appropriate method may be adopted as a method of fixing the carbon nanotubes onto the shaft-shaped base material. Examples of such fixation method include: a method involving using a paste or the like to per form bonding; a method involving using a double-sided tape or the like to perform fixation based on pressure-sensitive adhesion; a method involving using, as the shaft-shaped base material, a substrate used in the production of the carbon nanotube aggregate; and a method involving utilizing the adhesive property of the carbon nanotube aggregate to perform fixation. Of those fixation methods, a method involving using only a conductive material to perform fixation is preferred in order to remove a contamination source and prevent static buildup in consideration of the case where the carbon nanotube aggregate is analytically evaluated as it is in an analyzer after picking up a particle, and a specific example thereof is a method involving utilizing the adhesive property of the carbon nanotubes to perform fixation.

### «Carbon nanotube aggregate»

Regarding the carbon nanotube aggregate included in the particle adsorption microprobe of the present invention, two preferred embodiments as described below may be adopted.

### <First preferred embodiment>

A preferred embodiment (hereinafter sometimes referred to as "first preferred embodiment") of the carbon nanotube aggregate included in the particle adsorption microprobe of the present invention includes a plurality of carbon nanotubes, in which the carbon nanotubes each have a plurality of walls, in which the distribution width of the wall number distribution of the carbon nanotubes is 10 walls or more, and in which the relative frequency of the mode of the wall number distribution is 25% or less.

The distribution width of the wall number distribution of the carbon nanotubes is 10 walls or more, preferably from 10 walls to 30 walls, more preferably from 10 walls to 25 walls, still more preferably from 10 walls to 20 walls.

The "distribution width" of the wall number distribution of the carbon nanotubes refers to a difference between the maximum wall number and minimum wall number of the wall numbers of the carbon nanotubes.

When the distribution width of the wall number distribution of the carbon nanotubes falls within the range, the carbon nanotubes can bring together excellent mechanical properties and a high specific surface area, andmoreover, the carbon nanotubes can provide a carbon nanotube aggregate exhibiting excellent pressure-sensitive adhesive property. Therefore, a particle adsorption microprobe using such carbon nanotube aggregate can additionally selectively pick up only one extremely fine particle while additionally eliminating the need for the application of a physical stress in picking up the particle and while being additionally suppressed in contamination of a foreign matter surface in picking up the particle, and additionally facilitates the performance of the analytical evaluation of the particle as it is in an analyzer after its picking-up.

The wall numbers and wall number distribution of the carbon nanotubes may be measured with any appropriate device. The wall numbers and wall number distribution of the carbon nanotubes are preferably measured with a scanning electron microscope (SEM) or a transmission electron microscope (TEM). For example, at least 10, preferably 20 or more carbon nanotubes may be taken out from a carbon nanotube aggregate to evaluate the wall numbers and the wall number distribution by the measurement with the SEM or the TEM.

The maximum wall number of the wall numbers of the carbon nanotubes is preferably from 5 to 30, more preferably from 10 to 30, still more preferably from 15 to 30, particularly preferably from 15 to 25.

The minimum wall number of the wall numbers of the carbon nanotubes is preferably from 1 to 10, more preferably from 1 to 5.

When the maximum wall number and minimum wall number of the wall numbers of the carbon nanotubes fall within the ranges, the carbon nanotubes can bring together additionally excellent mechanical properties and a high specific surface area, and moreover, the carbon nanotubes can provide a carbon nanotube aggregate exhibiting additionally excellent pressure-sensitive adhesive property. Therefore, a particle adsorption microprobe using such carbon nanotube aggregate can additionally selectively pick up only one extremely fine particle while additionally eliminating the need for the application of a physical stress in picking up the particle and while being additionally suppressed in contamination of a foreign matter surface in picking up the particle, and additionally facilitates the performance of the analytical evaluation of the particle as it is in an analyzer after its picking-up.

The relative frequency of the mode of the wall number distribution is 25% or less, preferably from 1% to 25%, more preferably from 5% to 25%, still more preferably from 10% to 25%, particularly preferably from 15% to 25%. When the relative frequency of the mode of the wall number distribution falls within the range, the carbon nanotubes can bring together excellent mechanical properties and a high specific surface area, and moreover, the carbon nanotubes can provide a carbon nanotube aggregate exhibiting excellent pressure-sensitive adhesive property. Therefore, a particle adsorption microprobe using such carbon nanotube aggregate can additionally selectively pick up only one extremely fine particle while additionally eliminating the need for the application of a physical stress in picking up the particle and while being additionally suppressed in contamination of a foreign matter surface in picking up the particle, and additionally facilitates the performance of the analytical evaluation of the particle as it is in an analyzer after its picking-up.

The mode of the wall number distribution is present at preferably from 2 to 10 walls in number, more preferably from 3 to 10 walls in number. When the mode of the wall number distribution falls within the range, the carbon nanotubes can bring together excellent mechanical properties and a high specific surface area, and moreover, the carbon nanotubes can provide a carbon nanotube aggregate exhibiting excellent pressure-sensitive adhesive property. Therefore, a particle adsorption microprobe using such carbon nanotube aggregate can additionally selectively pick up only one extremely fine particle while additionally eliminating the need for the application of a physical stress in picking up the particle and while being additionally suppressed in contamination of a foreign matter surface in picking up the particle, and additionally facilitates the performance of the analytical evaluation of the particle as it is in an analyzer after its picking-up.

### <Second preferred embodiment>

Another preferred embodiment (hereinafter sometimes referred to as "second preferred embodiment") of the carbon nanotube aggregate included in the particle adsorption microprobe of the present invention includes a plurality of carbon nanotubes, in which the carbon nanotubes each have a plurality of walls, in which the mode of the wall number distribution of the carbon nanotubes is present at 10 or less walls in number, and in which the relative frequency of the mode is 30% or more.

The distribution width of the wall number distribution of the carbon nanotubes is preferably 9 walls or less, more preferably from 1 wall to 9 walls, still more preferably from 2 walls to 8 walls, particularly preferably from 3 walls to 8 walls.

The "distribution width" of the wall number distribution of the carbon nanotubes refers to a difference between the maximum wall number and minimum wall number of the wall numbers of the carbon nanotubes.

When the distribution width of the wall number distribution of the carbon nanotubes falls within the range, the carbon nanotubes can bring together excellent mechanical properties and a high specific surf ace area, andmoreover, the carbon nanotubes can provide a carbon nanotube aggregate exhibiting excellent pressure-sensitive adhesive property. Therefore, a particle adsorption microprobe using such carbon nanotube aggregate can additionally selectively pick up only one extremely fine particle while additionally eliminating the need for the application of a physical stress in picking up the particle and while being additionally suppressed in contamination of a foreign matter surface in picking up the particle, and additionally facilitates the performance of the analytical evaluation of the particle as it is in an analyzer after its picking-up.

The wall numbers and wall number distribution of the carbon nanotubes may be measured with any appropriate device. The wall numbers and wall number distribution of the carbon nanotubes are preferably measured with a scanning electron microscope (SEM) or a transmission electron microscope (TEM). For example, at least 10, preferably 20 or more carbon nanotubes may be taken out from a carbon nanotube aggregate to evaluate the wall numbers and the wall number distribution by the measurement with the SEM or the TEM.

The maximum wall number of the wall numbers of the carbon nanotubes is preferably from 1 to 20, more preferably from 2 to 15, still more preferably from 3 to 10.

The minimum wall number of the wall numbers of the carbon nanotubes is preferably from 1 to 10, more preferably from 1 to 5.

When the maximum wall number and minimum wall number of the wall numbers of the carbon nanotubes fall within the ranges, the carbon nanotubes can bring together additionally excellent mechanical properties and a high specific surface area, andmoreover, the carbon nanotubes can provide a carbon nanotube aggregate exhibiting additionally excellent pressure-sensitive adhesive property. Therefore, a particle adsorption microprobe using such carbon nanotube aggregate can additionally selectively pick up only one extremely fine particle while additionally eliminating the need for the application of a physical stress in picking up the particle and while being additionally suppressed in contamination of a foreign matter surface in picking up the particle, and additionally facilitates the performance of the analytical evaluation of the particle as it is in an analyzer after its picking-up.

The relative frequency of the mode of the wall number distribution is 30% or more, preferably from 30% to 100%, more preferably from 30% to 90%, still more preferably from 30% to 80%, particularly preferably from 30% to 70%. When the relative frequency of the mode of the wall number distribution falls within the range, the carbon nanotubes can bring together excellent mechanical properties and a high specific surface area, and moreover, the carbon nanotubes can provide a carbon nanotube aggregate exhibiting excellent pressure-sensitive adhesive property. Therefore, a particle adsorption microprobe using such carbon nanotube aggregate can additionally selectively pick up only one extremely fine particle while additionally eliminating the need for the application of a physical stress in picking up the particle and while being additionally suppressed in contamination of a foreign matter surface in picking up the particle, and additionally facilitates the performance of the analytical evaluation of the particle as it is in an analyzer after its picking-up.

The mode of the wall number distribution is present at 10 or less walls in number, preferably from 1 to 10 walls in number, more preferably from 2 to 8 walls in number, still more preferably from 2 to 6 walls in number. In the present invention, when the mode of the wall number distribution falls within the range, the carbon nanotubes can bring together excellent mechanical properties and a high specific surface area, and moreover, the carbon nanotubes can provide a carbon nanotube aggregate exhibiting excellent pressure-sensitive adhesive property. Therefore, a particle adsorption microprobe using such carbon nanotube aggregate can additionally selectively pick up only one extremely fine particle while additionally eliminating the need for the application of a physical stress in picking up the particle and while being additionally suppressed in contamination of a foreign matter surface in picking up the particle, and additionally facilitates the performance of the analytical evaluation of the particle as it is in an analyzer after its picking-up.

### <<Method of producing carbon nanotube aggregate>>

Any appropriate method may be adopted as a method of producing the carbon nanotube aggregate included in the particle adsorption microprobe of the present invention.

The method of producing the carbon nanotube aggregate included in the particle adsorption microprobe of the present invention is, for example, a method of producing a carbon nanotube aggregate aligned substantially perpendicularly from a smooth substrate by chemical vapor deposition (CVD) involving forming a catalyst layer on the substrate and filling a carbon source in a state in which a catalyst is activated with heat, plasma, or the like to grow the carbon nanotubes. In this case, for example, the removal of the substrate provides a carbon nanotube aggregate aligned in a length direction.

Any appropriate substrate may be adopted as the substrate. The substrate is, for example, a material having smoothness and high-temperature heat resistance enough to resist the production of the carbon nanotubes. Examples of such material include quartz glass, silicon (such as a silicon wafer), and a metal plate made of, for example, aluminum. The substrate may be directly used as the shaft-shaped base material that may be included in the particle adsorption probe of the present invention.

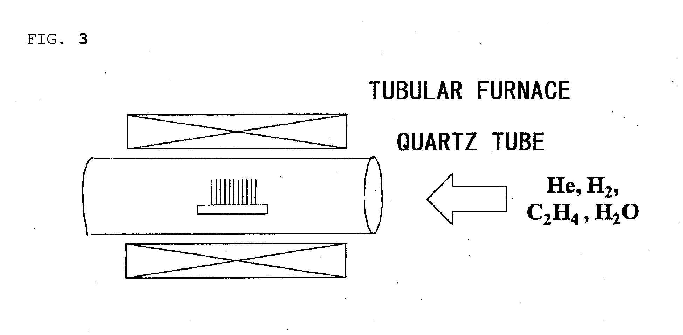

Any appropriate apparatus may be adopted as an apparatus for producing the carbon nanotube aggregate included in the particle adsorption microprobe of the present invention. The apparatus is, for example, a thermal CVD apparatus of a hot wall type formed by surrounding a cylindrical reaction vessel with a resistance heating electric tubular furnace as illustrated in FIG. **3****.** In this case, for example, a heat-resistant quartz tube is preferably used as the reaction vessel.

Any appropriate catalyst may be used as the catalyst (material for the catalyst layer) that may be used in the production of the carbon nanotube aggregate included in the particle adsorption microprobe of the present invention. Examples of the catalyst include metal catalysts such as iron, cobalt, nickel, gold, platinum, silver, and copper.

Upon production of the carbon nanotube aggregate included in the particle adsorption microprobe of the present invention, an alumina/hydrophilic film may be formed between the substrate and the catalyst layer as required.

Any appropriate method may be adopted as a method of producing the alumina/hydrophilic film. For example, the film may be obtained by producing a SiO₂ film on the substrate, depositing Al from the vapor, and increasing the temperature of Al to 450°C after the deposition to oxidize Al. According to such production method, Al₂O₃ interacts with the hydrophilic SiO₂ film, and hence an Al₂O₃ surface different from that obtained by directly depositing Al₂O₃ from the vapor in particle diameter is formed. When Al is deposited from the vapor, and then its temperature is increased to 450°C so that Al may be oxidized without the production of any hydrophilic film on the substrate, it may be difficult to form the Al₂O₃ surface having a different particle diameter. In addition, when the hydrophilic film is produced on the substrate and Al₂O₃ is directly deposited from the vapor, it may also be difficult to form the Al₂O₃ surface having a different particle diameter.

The catalyst layer that may be used in the production of the carbon nanotube aggregate included in the particle adsorption microprobe of the present invention has a thickness of preferably from 0.01 nm to 20 nm, more preferably from 0.1 nm to 10 nm in order that fine particles may be formed. When the thickness of the catalyst layer that may be used in the production of the carbon nanotube aggregate included in the particle adsorption probe of the present invention falls within the range, the carbon nanotube aggregate can bring together excellent mechanical properties and a high specific surface area, and moreover, the carbon nanotube aggregate can exhibit excellent pressure-sensitive adhesive property. Therefore, a particle adsorption microprobe using such carbon nanotube aggregate can additionally selectively pick up only one extremely fine particle while additionally eliminating the need for the application of a physical stress in picking up the particle and while being additionally suppressed in contamination of a foreign matter surface in picking up the particle, and additionally facilitates the performance of the analytical evaluation of the particle as it is in an analyzer after its picking-up.

Any appropriate method may be adopted as a method of forming the catalyst layer. Examples of the method include a method involving depositing a metal catalyst from the vapor, for example, with an electron beam (EB) or by sputtering and a method involving applying a suspension of metal catalyst fine particles onto the substrate.

After its formation, the catalyst layer may be processed by a photolithographic process so as to have a pattern having any appropriate diameter. When such photolithographic process is performed, a carbon nanotube aggregate having a desired diameter can be produced in the end.

Any appropriate carbon source may be used as the carbon source that may be used in the production of the carbon nanotube aggregate included in the particle adsorption microprobe of the present invention. Examples thereof include: hydrocarbons such as methane, ethylene, acetylene, and benzene; and alcohols such as methanol and ethanol.

Any appropriate temperature may be adopted as a production temperature in the production of the carbon nanotube aggregate included in the particle adsorption microprobe of the present invention. For example, the temperature is preferably from 400°C to 1,000°C, more preferably from 500 °C to 900 °C, still more preferably from 600°C to 800°C in order that catalyst particles allowing sufficient expression of the effects of the present invention may be formed.

### Examples

Hereinafter, the present invention is described by way of Examples. However, the present invention is not limited thereto. It should be noted that various evaluations and measurements were performed by the following methods.

### <Measurement of length and diameter of carbon nanotube aggregate>

The length and diameter of a carbon nanotube aggregate were measured with a scanning electron microscope (SEM).

### <Evaluation of wall numbers and wall number distribution of carbon nanotubes in carbon nanotube aggregate>

The wall numbers and wall number distribution of carbon nanotubes in the carbon nanotube aggregate were measured with a scanning electron microscope (SEM) and/or a transmission electron microscope (TEM). At least 10 or more, preferably 20 or more carbon nanotubes in the obtained carbon nanotube aggregate were observed with the SEM and/or the TEM to check the wall number of each carbon nanotube, and the wall number distribution was created.

### <Probe test>

The carbon nanotube aggregate was bonded onto a smooth cross-section of a tungsten needle (TP-010 manufactured by Micro Support Co., Ltd., tip diameter= 10 µm) through the use of a silver paste (DOTITE D362, manufactured by Fujikura Kasei Co., Ltd.), to thereby produce a particle adsorption microprobe.

The obtained particle adsorption microprobe was fixed onto a sampling machine AxisPro (manufactured by Micro Support Co. , Ltd.) and brought into contact with polystyrene latexes (manufactured by Nisshin EM Corporation) and glass beads (FUJI GLASS BEADS, manufactured by Fuji Manufacturing Co., Ltd.) having various particle diameters (diameters) shown below. Then, a particle adsorption state was examined without applying a stress. A case where only one particle was adsorbed was marked with Symbol "○", and any other case was marked with Symbol "x".
Polystyrene latex "Product No. 1253": particle diameter: 1.1 µm
Polystyrene latex "Product No. 1254": particle diameter: 2.0 µm
Polystyrene latex "Product No. 1255": particle diameter: 3.0 µm
Glass beads "Product No. FGB-1500": particle diameter: 20 µm or less
Glass beads "Product No. FGB-1000": particle diameter: 30 µm or less

### [Example 1]

An alumina thin film (thickness: 20 nm) was formed on a silicon wafer (manufactured by Silicon Technology Co., Ltd.) as a substrate with a sputtering apparatus (RFS-200 manufactured by ULVAC, Inc.). An Fe thin film (thickness: 1 nm) was further deposited from the vapor onto the alumina thin film with the sputtering apparatus (RFS-200 manufactured by ULVAC, Inc.). After that, a pattern having a diameter of 1 µm was formed by a photolithographic process.

After that, the substrate was mounted in a quartz tube having a diameter of 30 mm, and a helium/hydrogen (90/50 sccm) mixed gas whose moisture content had been held at 600 ppm was flowed into the quartz tube for 30 minutes to replace the inside of the tube. After that, a temperature in the tube was increased with an electric tubular furnace to 765°C and stabilized at 765°C. While the temperature was held at 765°C, the inside of the tube was filled with a helium/hydrogen/ethylene (85/50/5 sccm, moisture content: 600 ppm) mixed gas, and the resultant was left to stand for 5 seconds to grow carbon nanotubes on the substrate. Thus, a carbon nanotube aggregate (1) in which the carbon nanotubes were aligned in their length directions was obtained.

The carbon nanotube aggregate (1) had a length of 2 µm and a diameter of 1 µm.

In the wall number distribution of the carbon nanotubes included in the carbon nanotube aggregate (1), a mode was present at 2 walls, and its relative frequency was 75%.

The obtained carbon nanotube aggregate (1) was bonded onto a smooth cross-section of a tungsten needle (TP-010 manufactured by Micro Support Co., Ltd., tip diameter= 10 µm) through the use of a silver paste (DOTITE D362, manufactured by Fujikura Kasei Co. , Ltd.), to thereby produce a particle adsorption microprobe (1).

Table 1 shows evaluation results.

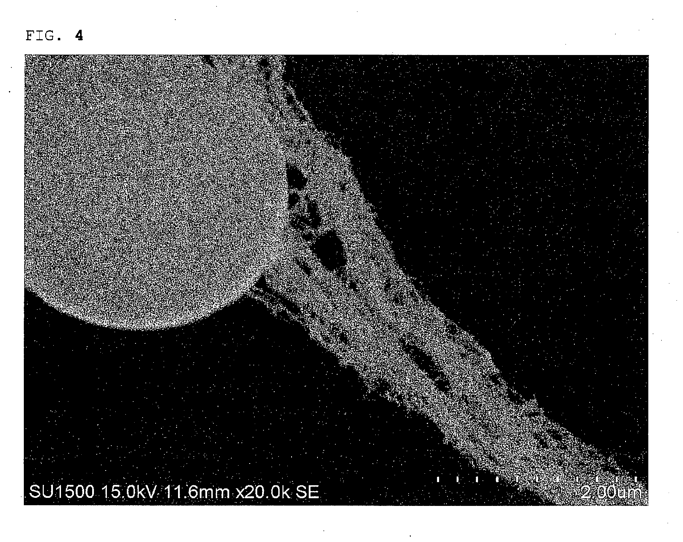

In addition, FIG. **4** shows a photographic view provided by a scanning electron microscope (SEM) showing a state where a particle is adsorbed by the obtained particle adsorption microprobe.

### [Example 2]

An alumina thin film (thickness: 20 nm) was formed on a silicon wafer (manufactured by Silicon Technology Co., Ltd.) as a substrate with a sputtering apparatus (RFS-200 manufactured by ULVAC, Inc.). An Fe thin film (thickness: 1 nm) was further deposited from the vapor onto the alumina thin film with the sputtering apparatus (RFS-200 manufactured by ULVAC, Inc.). After that, a pattern having a diameter of 2 µm was formed by a photolithographic process.

After that, the substrate was mounted in a quartz tube having a diameter of 30 mm, and a helium/hydrogen (90/50 sccm) mixed gas whose moisture content had been held at 600 ppm was flowed into the quartz tube for 30 minutes to replace the inside of the tube. After that, a temperature in the tube was increased with an electric tubular furnace to 765°C and stabilized at 765°C. While the temperature was held at 765°C, the inside of the tube was filled with a helium/hydrogen/ethylene (85/50/5 sccm, moisture content: 600 ppm) mixed gas, and the resultant was left to stand for 10 seconds to grow carbon nanotubes on the substrate. Thus, a carbon nanotube aggregate (2) in which the carbon nanotubes were aligned in their length directions was obtained.

The carbon nanotube aggregate (2) had a length of 5 µm and a diameter of 2 µm.

In the wall number distribution of the carbon nanotubes included in the carbon nanotube aggregate (2), a mode was present at 2 walls, and its relative frequency was 75%.

The obtained carbon nanotube aggregate (2) was bonded onto a smooth cross-section of a tungsten needle (TP-010 manufactured by Micro Support Co., Ltd., tip diameter= 10 µm) through the use of a silver paste (DOTITE D362, manufactured by Fujikura Kasei Co. , Ltd.), to thereby produce a particle adsorption microprobe (2).

Table 1 shows evaluation results.

### [Example 3]

An alumina thin film (thickness: 20 nm) was formed on a silicon wafer (manufactured by Silicon Technology Co. , Ltd.) as a substrate with a sputtering apparatus (RFS-200 manufactured by ULVAC, Inc.). An Fe thin film (thickness: 1 nm) was further deposited from the vapor onto the alumina thin film with the sputtering apparatus (RFS-200 manufactured by ULVAC, Inc.). After that, a pattern having a diameter of 5 µm was formed by a photolithographic process.

After that, the substrate was mounted in a quartz tube having a diameter of 30 mm, and a helium/hydrogen (90/50 sccm) mixed gas whose moisture content had been held at 600 ppm was flowed into the quartz tube for 30 minutes to replace the inside of the tube. After that, a temperature in the tube was increased with an electric tubular furnace to 765°C and stabilized at 765°C. While the temperature was held at 765°C, the inside of the tube was filled with a helium/hydrogen/ethylene (85/50/5 sccm, moisture content: 600 ppm) mixed gas, and the resultant was left to stand for 15 seconds to grow carbon nanotubes on the substrate. Thus, a carbon nanotube aggregate (3) in which the carbon nanotubes were aligned in their length directions was obtained.

The carbon nanotube aggregate (3) had a length of 5 µm and a diameter of 5 µm.

In the wall number distribution of the carbon nanotubes included in the carbon nanotube aggregate (3), a mode was present at 2 walls, and its relative frequency was 75%.

The obtained carbon nanotube aggregate (3) was bonded onto a smooth cross-section of a tungsten needle (TP-010 manufactured by Micro Support Co., Ltd., tip diameter= 10 µm) through the use of a silver paste (DOTITE D362, manufactured by Fujikura Kasei Co. , Ltd.), to thereby produce a particle adsorption microprobe (3).

Table 1 shows evaluation results.

### [Comparative Example 1]

An Al thin film (thickness: 5 nm) was formed on a silicon wafer (manufactured by Silicon Technology Co., Ltd.) as a substrate with a sputtering apparatus (RFS-200 manufactured by ULVAC, Inc.). An Fe thin film (thickness: 0.35 nm) was further deposited from the vapor onto the Al thin film with the sputtering apparatus (RFS-200 manufactured by ULVAC, Inc.). After that, a pattern having a diameter of 30 µm was formed by a photolithographic process.

After that, the substrate was mounted in a quartz tube having a diameter of 30 mm, and a helium/hydrogen (90/50 sccm) mixed gas whose moisture content had been held at 600 ppm was flowed into the quartz tube for 30 minutes to replace the inside of the tube. After that, a temperature in the tube was increased with an electric tubular furnace to 765°C and stabilized at 765°C. While the temperature was held at 765°C, the inside of the tube was filled with a helium/hydrogen/ethylene (85/50/5 sccm, moisture content: 600 ppm) mixed gas, and the resultant was left to stand for 0.5 minute to grow carbon nanotubes on the substrate. Thus, a carbon nanotube aggregate (C1) in which the carbon nanotubes were aligned in their length directions was obtained.

The carbon nanotube aggregate (C1) had a length of 10 µm and a diameter of 130 µm.

In the wall number distribution of the carbon nanotubes included in the carbon nanotube aggregate (C1), a mode was present at 1 wall, and its relative frequency was 61%.

The obtained carbon nanotube aggregate (C1) was bonded onto a smooth cross-section of a tungsten needle (TP-010 manufactured by Micro Support Co., Ltd., tip diameter= 10 µm) through the use of a silver paste (DOTITE D362, manufactured by Fujikura Kasei Co. , Ltd.), to thereby produce a particle adsorption microprobe (C1).

Table 1 shows evaluation results.

### [Comparative Example 2]

An alumina thin film (thickness: 20 nm) was formed on a silicon wafer (manufactured by Silicon Technology Co. , Ltd.) as a substrate with a sputtering apparatus (RFS-200 manufactured by ULVAC, Inc.). An Fe thin film (thickness: 1 nm) was further deposited from the vapor onto the alumina thin film with the sputtering apparatus (RFS-200 manufactured by ULVAC, Inc.). After that, a pattern having a diameter of 20 µm was formed by a photolithographic process.

After that, the substrate was mounted in a quartz tube having a diameter of 30 mm, and a helium/hydrogen (90/50 sccm) mixed gas whose moisture content had been held at 600 ppm was flowed into the quartz tube for 30 minutes to replace the inside of the tube. After that, a temperature in the tube was increased with an electric tubular furnace to 765°C and stabilized at 765°C. While the temperature was held at 765°C, the inside of the tube was filled with a helium/hydrogen/ethylene (85/50/5 sccm, moisture content: 600 ppm) mixed gas, and the resultant was left to stand for 2.5 minutes to grow carbon nanotubes on the substrate. Thus, a carbon nanotube aggregate (C2) in which the carbon nanotubes were aligned in their length directions was obtained.

The carbon nanotube aggregate (C2) had a length of 30 µm and a diameter of 20 µm.

In the wall number distribution of the carbon nanotubes included in the carbon nanotube aggregate (C2), a mode was present at 2 walls, and its relative frequency was 75%.

The obtained carbon nanotube aggregate (C2) was bonded onto a smooth cross-section of a tungsten needle (TP-010 manufactured by Micro Support Co., Ltd., tip diameter= 10 µm) through the use of a silver paste (DOTITE D362, manufactured by Fujikura Kasei Co. , Ltd.), to thereby produce a particle adsorption microprobe (C2).

Table 1 shows evaluation results.

**[Table 1]**

| | | CNT aggregate length (µm) | CNT aggregate diameter (µm) | Probe test | | | | |
|---|---|---|---|---|---|---|---|---|
| | | | | Model number 1253 | Model number 1254 | Model number 1255 | FGB-1500 | FGB-1000 |
| | | | | Particle diameter 1.1 µm | Particle diameter 2.0 µm | Particle diameter 3.0 µm | ≤20 µm | ≤30 µm |
| Example 1 | DW-75 | 2 | 1 | ○ | ○ | ○ | × (Zero particles) | × (Zero particles) |
| Example 2 | DW-75 | 5 | 2 | ○ | ○ | ○ | × (Zero particles) | × (Zero particles) |
| Example 3 | DW-75 | 5 | 5 | ○ | ○ | ○ | × (Zero particles) | × (Zero particles) |
| Comparative Example 1 | SW-61 | 10 | 30 | × (Two or more particles) | × (Two or more particles) | × (Two or more particles) | × (Two or more particles) | × (Two or more particles) |
| Comparative Example 2 | DW-75 | 30 | 20 | × (Two or more particles) | × (Two or more particles) | × (Two or more particles) | × (Two or more particles) | × (Two or more particles) |

As apparent from Table 1, each of the particle adsorption microprobes obtained in Examples can selectively pick up only one extremely fine particle without requiring the application of a physical stress in picking up the particle and without contaminating a foreign matter surface in picking up the particle.

### [Example 4]

The particle adsorption microprobe obtained in Example 1 was able to maintain the state shown in the photographic view of FIG. 4, taken with a scanning electron microscope (SEM), as it was in the analyzer after picking up a particle.

Thus, it was found that the particle adsorption microprobe obtained in Example 1 allowed the particle to be analytically evaluated as it was in the analyzer after its picking-up.

### Industrial Applicability

The particle adsorption microprobe of the present invention is suitably used for, for example, picking up only one from fine particles scattered on a surface of an object to be analyzed in an analysis application or the like so that the particle may be carried into an analyzer and analytically evaluated.

### Reference Signs List

**1000** particle adsorption microprobe
**100** carbon nanotube aggregate
**10** carbon nanotube
**10a** one end of carbon nanotube
**20** shaft-shaped base material
**20a** cross-section side surface of shaft-shaped base material

## Claims

1. A particle adsorptionmicroprobe, comprising a carbon nanotube aggregate including a plurality of carbon nanotubes, wherein the particle adsorption microprobe adsorbs only one particle having a diameter of 10 µm or less.

2. A particle adsorption microprobe according to claim 1, wherein the carbon nanotube aggregate has a diameter of 10 µm or less.

3. A particle adsorption microprobe according to claim 1, wherein the carbon nanotube aggregate has a length of 10 µm or less.

4. A particle adsorption microprobe according to claim 1,
wherein the carbon nanotubes each have a plurality of walls,
wherein a distribution width of a wall number distribution of the carbon nanotubes is 10 walls or more, and
wherein a relative frequency of a mode of the wall number distribution is 25% or less.

5. A particle adsorption microprobe according to claim 1,
wherein the carbon nanotubes each have a plurality of walls,
wherein a mode of a wall number distribution of the carbon nanotubes is present at 10 or less walls in number, and
wherein a relative frequency of the mode is 30% or more.

6. A particle adsorption microprobe according to claim 1, further comprising a shaft-shaped base material, wherein the carbon nanotube aggregate is provided on the shaft-shaped base material.
